# EUROPEAN PATENT SPECIFICATION

(11) **EP 2 985 533 B1**
(45) Date of publication and mention of the grant of the patent: **05.06.2019**
(21) Application number: 14782535.0
(22) Date of filing: 09.04.2014
(51) Int. Cl.: F24C 15/20, A47J 37/12, A47J 36/38

(54) **AUTOMATIC FRYER**
AUTOMATISCHE FRITTEUSE
FRITEUSE AUTOMATIQUE

(30) Priority: 09.04.2013 ES 201330500
(43) Date of publication of application: 17.02.2016
(73) Proprietor: Qualityfry, S.L., 28027 Madrid (ES)
(72) Inventor: FERNÁNDEZ PÁEZ, Javier, E-28027 Madrid (ES)
(74) Representative: ABG Intellectual Property, S.L.
(86) International application number: PCT/ES2014/070282
(87) International publication number: WO 2014/167159

(56) References cited:
- EP-A1- 1 022 042
- WO-A1-01/00301
- WO-A2-01/30219
- ES-A6- 2 010 307
- GB-A- 2 146 888
- US-A- 4 489 647
- US-A- 4 852 471
- US-A- 5 454 296
- US-A1- 2004 206 347

## Description

### Field of the Invention

The present invention belongs to the technical field of devices for preparing fast food, and more specifically to the food fryers. The invention relates in particular to an automatic fryer with an expelled fume- and odor-treatment system, by means of a condensation system, a set of filters, and an ozone generator.

### Background of the Invention

Up until now there have been various food fryers in the state of the art in which the means for frying are conventional and the functions can be semi-automated.

In certain types of fryers, fumes and odors resulting from frying are expelled directly to the outside without any type of cleaning operation performed on them. This system obviously has the serious drawback of contamination of the area where the fryer is located with the expelled fume, and therefore makes it necessary to place a fume extractor in said area with suitable conduction and channeling of said fumes. Another drawback would be the odors and the fat accumulated in the area due to the fume expelled from the fryer, even though it is removed with the fume extractor of said area.

In order to try to partially solve these problems, in certain fryers the fumes are passed through filters, but the treatment achieved only with filters is rather poor, not being able to remove more than just some of the residues.

Spanish patent ES2190683 shows and describes a semiautomatic fryer with fume and odor treatment by means of condensation and subsequent filtering with carbon filters. This method performs a much more efficient treatment, but the purity of the outlet flow is not complete, in addition to the fact that as the fume passes through the carbon filter, the filter gradually looses filtering effectiveness and the fume exiting the fryer contains increasingly more residues.

Another drawback existing in fryers of the state of the art is that they lack a system that controls the oil level which automatically prevents frying if the oil level is insufficient or excessive, or if it contains too high of a level of given polar components exceeding standard maximum levels and making the oil harmful for health.

Document GB 2 146 888 A discloses a food frying apparatus including an upright cabinet with a fan assembly to exhaust air through the top of the cabinet while drawing air in, from the lower portion of the cabinet. Document US4489647A also discloses a food frying apparatus.

Therefore a system solving the drawbacks existing in the preceding systems of the state of the art was desirable.

### Description of the Invention

The present invention solves the problems existing in the state of the art by means of an automatic fryer with a fume- and odor-treatment system as defined in claim 1. The fryer has a vertically arranged, removable tub which has an inlet for the product and a rotating radial blade for moving said product during frying and the subsequent removal thereof.

The fume- and odor-treatment system is formed by a condensation system, an activated carbon filter, an ozone generator, and a mixing chamber.

The condensation system has at least one condenser connected to a fume exhaust of the frying tub, an air outlet, and a condensate outlet connected to a condensate collector to safely collect same.

Preferably, the condensation system incorporates a Peltier cell to cool the ventilation air and thus be able to remove a larger amount of condensates.

Attached at the air outlet of the condensation system, the fryer has an activated carbon filter through which the outlet flow of said condensation system passes. The activated carbon filter is made up of porous carbon elements, on the surface of which there are held molecules in solution of said outlet flow of the condensation system.

Additionally, the frying tub of the automatic fryer is split in two parts by means of the rotating radial blade and has frying control means connected to the said frying tub. These frying control means in turn have frying time control means connected to each of the parts of the frying tub and to the rotating radial blade, for the automatic removal of the products to be fried once an established time has lapsed.

Furthermore, the control means have automatic opening means of the inlet, which automatically open said inlet when at least one of the two parts of the frying tub is empty.

According to a preferred embodiment of the invention, the fryer has a metal mesh filter arranged between the air outlet of the condensation system and the activated carbon filter, which holds at least part of the solid elements of the flow that has exited the condensation system, making operation of the subsequent activated carbon filter more efficient.

The fryer additionally has an ozone flow given off by an ozone generator, and the two flows are mixed together, giving rise to a treated flow being expelled outside the fryer.

The semiautomatic fryer additionally has an oil level control system having a series of temperature-measuring probes arranged at different heights in the tub. The level control system has a reference temperature probe arranged at the bottom of the tub measuring the temperature in this area, and at least another level temperature probe arranged at a given height measuring the temperature in that height. If the difference in temperatures between the reference probe and the other probe is greater than a predetermined value n, this will indicate that at that given height there is a very low temperature compared to the bottom of the tub because in that area at that given height there is no oil. If another temperature probe is included at a greater height, a maximum level can similarly be determined, and when said maximum level is reached by the oil it will be indicated because the difference in temperatures between the reference probe and the level probe is, in this case, less than the predetermined value n. A maximum level and a minimum level between which the oil level can be situated can therefore be determined, and if said oil level is not between these minimum and maximum levels, the oil level control system disconnects the electrical resistance of the fryer to prevent frying with an insufficient or excessive amount of oil.

These temperature probes also work like an anti-fire system, given that they provide immediate information about the oil temperature. If a predetermined safety temperature is exceeded, power is automatically cut off, the resistance heating the oil being disconnected. Additionally, electronic temperature control performed through the two probes will detect when the oil level is below the lower probe, immediately deactivating the electrical resistance when this occurs to prevent the risk of fire. As an additional safety measure, there is a thermostat that would cut off power automatically when reaching a certain temperature in a certain predetermined area, and also if a malfunction were detected in any of the two temperature probes.

If a fire caused by an external element were to occur, the low oxygen concentration would cause the flame to go out due to the fact that both the product inlet and the product outlet are virtually sealed.

In the unlikely case that the aforementioned safety systems were to fail and the resistance were to be kept on continuously, due to an act of vandalism, for example, continuous fires would take place inside the fryer and would be put out due to the lack of oxygen. The successive series of fires and the putting out of same would completely use up the oil, causing the electrical resistance to "break" as it is kept hot without being immersed in any fluid, assuring safety against fires caused by external elements.

Furthermore, the fryer can preferably have an automatic oil injection system. When the oil level control system detects that the level is below the minimum level by means of the temperature probes, the automatic injection system injects oil in the frying tub by means of a pump, which takes the oil from a container outside the fryer.

In a preferred embodiment of the invention, the fryer has a polar component controller, which allows controlling the good state of the oil at all times, such that the fryer is disconnected and no frying is allowed when the oil exceeds standard maximum levels, which could be harmful for the health of any consumers of the products fried with said oil.

According to an example, the fryer can incorporate an automatic sequential ration frying system. To that end, the product inlet is automated and controlled electronically, which allows preparing up to three rations, such that two rations will enter the frying chamber and the third ration will remain in the automated inlet hopper, waiting to enter said frying chamber when one of the preceding rations leaves it.

In an example, the frying chamber is split in two parts by means of the rotation and positioning of the removal blade. The hopper for accessing the frying chamber opens automatically once the first part is free of the product in the frying process (which has been taken to the second part) to allow the entrance of a new previously selected ration. Provided that the hopper is empty, a new product could be introduced therein and the desired time selected. Regardless of whether or not the two frying areas are occupied, the fryer itself will electronically decide when the new ration should enter the frying area.

To perform this function, the fryer incorporates frying time control means in order to be able to automatically remove each of the products to be fried according to the time selected for each. This provides an automated product outlet, in which the outlet time of each product is controlled depending on the initially selected time, which allows programming and frying several different products with different frying times.

These control means incorporate a high performance system (electronic control of the frying cycles) by means of an algorithm that allows frying in two parts of two rations at the same time, and a third one on standby. It is based on an optimization algorithm which allows control of the frying times of each of the frying parts separately and allowing that the third ration on standby enters the frying area once one of the parts is available.

The foregoing means that the fryer allows completely automated continuous production, both for the entrance and for the exit of up to three products that can be different and have different frying times.

### Brief Description of the Drawings

An embodiment of the invention referring to a series of drawings will be described below in an illustrative and nonlimiting manner to help understand the invention.
Figure 1 schematically shows a fryer object of the present invention according to a preferred embodiment in which there is a metal filter between the condensation system and the activated carbon filter.
Figure 2 schematically shows an embodiment of the fume- and odor-treatment system of the fryer object of the invention, with the condensation system, the activated carbon filter, the ozone generator and the mixing chamber.
Figure 3 schematically shows an embodiment of the level control system and the polar component controller existing in a particular embodiment of the invention.

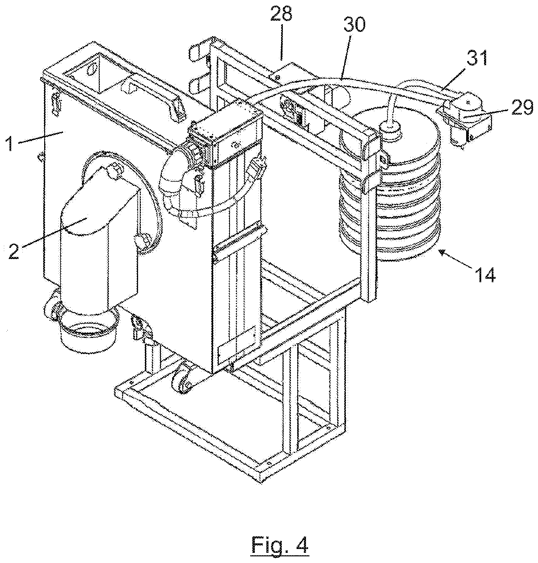

Figure 4 shows an embodiment of the automatic oil injection system coupled to the fryer object of the present invention.

Reference is made in these drawings to a set of elements, namely:
- 1.: frying tub
- 2.: fumes exiting the frying tub
- 3.: condenser
- 4.: condensate outlet of the condensation system
- 5.: activated carbon filter
- 6.: fume exhaust of the frying tub
- 7.: treated flow
- 8.: air outlet of the condensation system
- 9.: ozone generator
- 10.: outlet for the activated carbon filter
- 11.: mixing chamber
- 12.: extractor
- 13.: condensate collector
- 14.: container of oil
- 15.: ozone flow
- 16.: metal mesh filter
- 17.: level temperature probe
- 18.: reference temperature probe
- 19.: polar component controller
- 20.: oil level control system
- 21.: fan
- 22.: product inlet hopper
- 23.: perforated grating of the frying tub
- 24.: outlet flow of the activated carbon filter
- 25.: condensation system
- 26.: fume- and odor-treatment system
- 27.: outlet flow of the condensation system
- 28.: automatic oil injection system
- 29.: pump of the automatic oil injection system
- 30.: injection tube of the automatic oil injection system
- 31.: suction tube of the automatic oil injection system

### Detailed description of the Invention

The object of the present invention is an automatic fryer.

As can be seen in the drawings, the fryer has a removable and vertically arranged frying tub 1, with an inlet hopper 22 for the products to be fried, a rotating blade, and a fume exhaust 6 through which all the fume generated when frying the products introduced in the fryer exits.

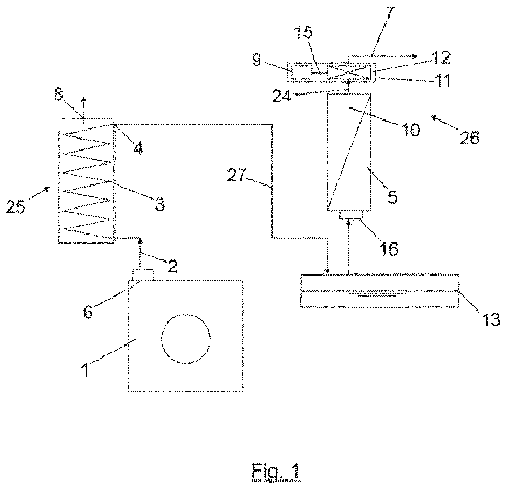

The automatic fryer object of the invention has a fume- and odor-treatment system 26 which is formed by a condensation system 25, an activated carbon filter 5, and an ozone generator 9, as shown in Figure 1.

The condensation system 25 has at least one condenser 3 connected to the fume exhaust 6 of the frying tub 1.

In a particular embodiment of the invention, the condenser 3 is a stainless steel coil through which all the fumes generated during the frying process circulate, the condensation thereof being caused due to the ventilation of the coil by means of air forced through a fan 21. After the condensation of the fumes generated during the frying process condensates, which are water and oil, are generated and exit through a condensate outlet 4, arranged preferably in the lower part of the condensation system 25, and conducting said condensates to a condensate collector 13. Clean air exits in an outlet flow through an air outlet 8.

Preferably, the condensation system incorporates a Peltier cell to cool the ventilation air and thus be able to remove a larger amount of condensates.

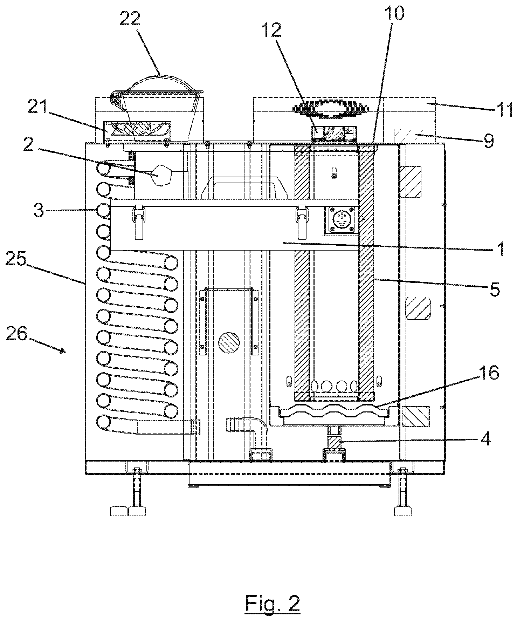

Figure 2 shows an activated carbon filter 5 of the condensation system 25. This activated carbon filter 5 is attached at the air outlet 8 of the condenser 3 and comprises porous carbon elements, on the surface of which there are held, due to an adsorption process, molecules in solution that were in the outlet flow of the condensation system 27, an outlet flow 24 exiting the activated carbon filter 5.

According to a preferred embodiment of the invention shown in Figure 1, a metal filter 16 is arranged at the inlet of the activated carbon filter 5 and holds part of the solids in the outlet flow of the condensation system 27. This makes the flow entering the activated carbon filter 5 cleaner of residues and the treatment more efficient. Preferably this metal filter 16 is formed by a square pad with an air recirculation system generating additional condensation, this square pad being filled with a metal mesh therein, which holds averaged-sized solid particles.

Additionally, Figure 2 also shows an ozone generator 9, which gives off an ozone flow 15 that is mixed with the outlet flow of the activated carbon filter 24 in a mixing chamber 11, and generates a treated flow 7 that is expelled from the fryer. According to a particular embodiment of the invention, the fume- and odor-treatment system 26 comprises a mixing chamber 11 receiving the outlet flow of the activated carbon filter 24, and furthermore the ozone flow 15 generated by the ozone generator 9 also flows into the mixing chamber 11. The outlet flow of the activated carbon filter 24 is thereby mixed and treated in said mixing chamber 11. This particular embodiment with the mixing chamber is depicted in Figures 1 to 2.

According to an alternative embodiment of the invention, the ozone flow 15 generated by the ozone generator 9 flows directly into the outlet flow 27 of the condensation system 25, said outlet flow 27 of the condensation system 25 being thereby mixed and treated.

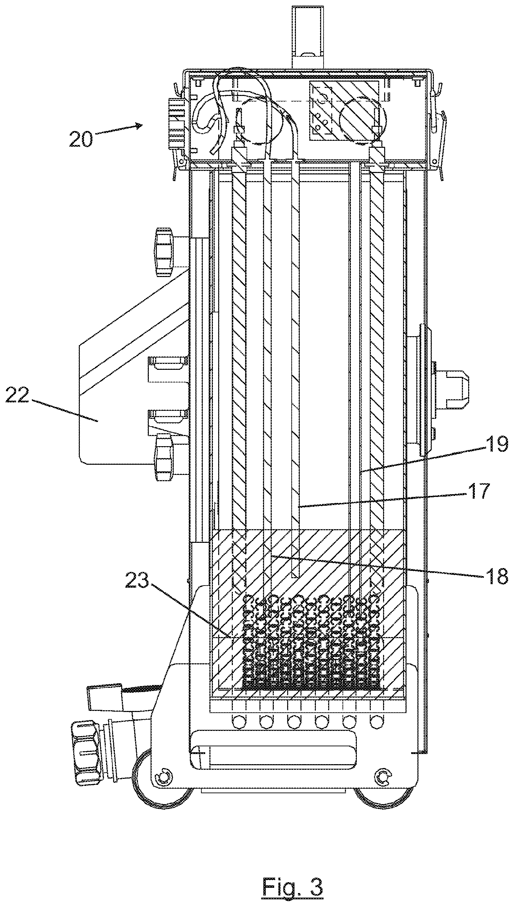

In a preferred embodiment of the fryer object of the invention, as is shown in Figure 3, it has an oil level control system 20 which is formed by a reference temperature probe 18 arranged at the bottom of the frying tub 1 and measuring the temperature in that area.

Additionally, the level control system 20 has at least one level temperature probe 17 arranged at a given height considered the desired minimum oil level, and measuring the temperature in that area. The level control system 20 calculates the difference in temperatures between the temperature measured by the reference temperature probe 18 and the first level temperature probe 17, and if this difference is greater than a pre-established value n, which in a preferred embodiment is usually 30°C, it indicates that the oil does not reach said height at which the first level temperature probe 17 is arranged. In a preferred embodiment a second level temperature probe is added at a height greater than the height of the first level temperature probe 17, which determines a desired maximum level which the oil is no to exceed, and measures the temperature in that area. Likewise, the level control system 20 calculates the difference in temperatures between the temperature measured by the reference temperature probe 18 and the second level temperature probe, and if this difference is less than the pre-established value n, this indicates that the oil reaches said height at which the second level temperature probe is arranged.

A minimum level and a maximum level between which the oil level is to be situated are thereby determined, and if said oil level is not between this minimum and maximum level, the oil level control system 20 disconnects the resistance of the fryer 1 to prevent frying with an amount of oil that is either insufficient or excessive.

Additionally, the fryer can have an automatic oil injection system 28. When the oil level control system 20 detects that the level is below the minimum level by means of the temperature probes 18, 17, the automatic injection system 28 injects oil in the frying tub 1 by means of a pump 29 and an injection tube 30, which takes the oil from a container 14 outside the fryer by means of a suction tube 31, thereby automatically replacing the oil as soon as it is detected that the level is insufficient, without having to use human resources for controlling the oil level and the replacement thereof. This injection of oil will automatically stop once the maximum level is reached, which will be detected through the electronic comparison between the temperature of the three probes 18, 17.

In a preferred embodiment of the invention, the temperature probes 18, 17 used by the oil level control system 20 are PT100 probes.

These temperature probes 18, 17 also work like an anti-fire system, given that they provide immediate information about the oil temperature. If a predetermined safety temperature is exceeded, power is automatically cut off, the resistance heating the oil being disconnected. Additionally, the lower oil level control will indicate when the oil level is below the active area of the resistance of the fryer, and thereby prevent a fire from starting. There is a thermostat as an additional safety measure that would automatically cut off power when a certain temperature in a certain predetermined area is reached.

Figure 3 additionally shows a polar component controller 19 existing in the fryer which allows controlling the good state of the oil at all times, not allowing any type of frying when the oil exceeds standard maximum levels, because when the values measured by said polar component controller 19 are outside a pre-established range, the electrical resistance of the fryer is disconnected.

According to a preferred embodiment of the invention, the frying tub 1 of the automatic fryer is split in two parts by means of the rotating radial blade and has frying control means connected to the said frying tub 1. These frying control means in turn have frying time control means connected to each of the parts of the frying tub 1 and to the rotating radial blade, for the automatic removal of the products to be fried once an established time has lapsed.

Furthermore, the control means have automatic opening means of the inlet 22, which automatically open said inlet 22 when at least one of the two parts of the frying tub 1 is empty, so that a new ration of product to be fried can be introduced.

Therefore, according to a particular embodiment of the invention, a first ration to be fried remains in the first of the parts of the frying tub 1 until a given time has lapsed, which time will be controlled by an optimization algorithm of the control means, then going to the other part of the frying tub 1 by means of a rotation of the rotating removal blade. At this time a second ration will fall into the first of the parts of the frying tub 1. When the first ration is finished frying, the rotating removal blade will take it out of the frying tub 1, taking, in the continuity of the rotation thereof, the second ration from the first of the parts of the frying tub 1 to the second of the parts. Immediately after that a third ration will fall from the inlet 22 into the first of the parts of the frying tub 1. This process is continuous, as long as the hopper providing access to the inlet 22 continues to be filled, and with the selection of the relevant frying programs of each successive ration.

Additionally, according to a particular embodiment of the invention, the fryer has a system for eliminating the mixture of flavors. According to this, the frying tub 1 has a solid residue storage system in a warmed area to prevent the residues from frying and producing a mixture of flavors between different foods fried therein (meats, vegetables, fish, battered foods, potatoes, etc.). The fryer has a perforated grating 23 inside the frying tub 1 arranged at a given height from the resistance or any other oil heating means, which prevents contact of the foods with this resistance or heating means, and allows the residues to go to the warmed area. The frying process used consists of cooking the product on the surface, leaving about one-third of the total volume of oil below the resistance responsible for heating said oil. This arrangement of the fryer and of its components cause the residues to always be below 100°C, preventing them from burning while the frying area is between 180-190°C. The fryer also incorporates a solid residue discharge system with minimum oil consumption, thereby preventing the solid residue of previous products from being reduced to ashes, thereby increasing durability of the oil.

## Claims

1. An automatic fryer **characterized in that** it comprises
- a removable and vertically arranged frying tub (1), with an inlet (22) for the product and a rotating radial blade, wherein the frying tub (1) is split in two parts by means of the rotating radial blade, and **in that** it comprises
- frying control means connected to the frying tub (1), which in turn comprise
- frying time control means connected to each of the parts of the frying tub (1) and to the rotating radial blade, for the automatic removal of the products to be fried once an established time has lapsed, and
- automatic opening means of the inlet (22) configured for the automatic opening of said inlet (22) when at least one of the two parts of the frying tub (1) is empty,
- a fume- and odor-treatment system (26), which in turn comprises
- a condensation system (25), having
- at least one condenser (3) connected to a fume exhaust (6) of the frying tub (1), arranged in the upper part thereof,
- an air outlet (8) through which clean air exits,
- and a condensate outlet (4) through which an outlet flow (27) exits the condensation system (25), the condensate outlet (4) being connected to a condensate collector (13),
- an activated carbon filter (5) attached at the air outlet (8) of the condensation system (25), having an outlet for the activated carbon filter (10) through which an outlet flow exits the activated carbon filter (24),
- an ozone generator (9) generating an ozone flow (15) which is mixed with the fume flow from the fryer, treating said flow,
- and an extractor (12), which expels the outlet flow of the activated carbon filter (24) outside the fryer.

2. The automatic fryer according to claim 1, **characterized in that** it comprises a metal mesh filter (16) arranged between the air outlet (8) of the condensation system (25) and the activated carbon filter (5), holding at least part of the solids in the outlet flow (27) of the condensation system (25).

3. The automatic fryer according to any of the preceding claims, **characterized in that**
- it comprises an oil level control system (20), in turn comprising
- a reference temperature probe (18) arranged at the bottom of the frying tub (1),
- and at least a first level temperature probe (17) arranged at a first height from the bottom of the frying tub (1), and determining a minimum level,
- and **in that** the level control system (20) calculates the difference in temperatures between the temperature measured by the reference temperature probe (18) and the temperature measured by the first level temperature probe (17) and disconnects the electrical resistance of the fryer when said difference in temperatures is greater than a pre-established value n.

4. The automatic fryer according to the preceding claim, **characterized in that** it comprises an automatic oil injection system (28), which by means of a pump (29), an injection tube (30), and a suction tube (31) taking oil from a container (14), injects oil in the frying tub (1) when the difference in temperatures between the temperature measured by the reference temperature probe (18) and the temperature measured by the level temperature probe (17) is greater than the pre-established value n.

5. The automatic fryer according to any of claims 3 to 4, **characterized in that**
- it comprises a second level temperature probe arranged at a second height from the bottom of the frying tub (1), greater than the first height, and determining a maximum level,
- and **in that** the level control system (20) calculates the difference in temperatures between the temperature measured by the reference temperature probe (18) and the temperature measured by the second level temperature probe and disconnects the frying tub (1) when said difference in temperature is less than the pre-established value n.

6. The automatic fryer according to any of claims 3 to 5, **characterized in that** the pre-established value n is 30°C.

7. The automatic fryer according to any of claims 3 to 6, **characterized in that** the temperature probes (17, 18) are PT100 probes.

8. The automatic fryer according to any of claims 3 to 7, **characterized in that**
- it comprises a polar component controller (19) arranged in the frying tub (1) and connected to the oil level control system (20),
- and **in that** the oil level control system (20) disconnects the electrical resistance of the fryer when the values measured by said polar component controller (19) are outside of certain pre-established ranges.

9. The automatic fryer according to any of the preceding claims, **characterized in that** the condenser (3) comprises a coil cooled by forced air cooling produced by a fan (21).

10. The automatic fryer according to any of the preceding claims, **characterized in that** the condensation system (25) comprises a Peltier cell cooling the ventilation air.

11. The automatic fryer according to any of the preceding claims, **characterized in that** it comprises a perforated grating (23) inside the frying tub (1) arranged at a given height above the oil heating means which prevent contact of the products to be fried with the oil heating means.

12. The automatic fryer according to any of the preceding claims, **characterized in that**
- the fume- and odor-treatment system (26) comprises a mixing chamber (11) receiving the outlet flow of the activated carbon filter (24)
- and **in that** the ozone flow (15) generated by the ozone generator (9) also flows into the mixing chamber (11),
the outlet flow of the activated carbon filter (24) being mixed and treated in said mixing chamber (11).

13. The automatic fryer according to any of claims 1 to 11, **characterized in that** the ozone flow (15) generated by the ozone generator (9) flows into the outlet flow (27) of the condensation system (25), said outlet flow (27) of the condensation system (25) being mixed and treated.

## Patentansprüche

1. Automatische Fritteuse, **dadurch gekennzeichnet, dass** sie Folgendes umfasst:
- eine abnehmbare und vertikal angeordnete Frittierwanne (1) mit einem Einlass (22) für das Produkt und einer sich drehenden radialen Schaufel, wobei die Frittierwanne (1) durch die sich drehende radiale Schaufel in zwei Teile geteilt ist, und dadurch, dass sie Folgendes umfasst:
- Frittiersteuerungsmittel, die mit der Frittierwanne (1) verbunden sind, die ihrerseits Folgendes umfassen:
- Frittierzeit-Steuerungsmittel, die mit beiden Teilen der Frittierwanne (1) und mit der sich drehenden radialen Schaufel verbunden sind, zum automatischen Entfernen der zu frittierenden Produkte, wenn eine vorgegebene Zeit verstrichen ist, und
- Mittel zum automatischen Öffnen des Einlasses (22), die konfiguriert sind, den Einlass (22) automatisch zu öffnen, wenn wenigstens einer der zwei Teile der Frittierwanne (1) leer ist, und
- ein Rauch- und Geruchsbehandlungssystem (26), das wiederum Folgendes umfasst:
- ein Kondensationssystem (25), das seinerseits Folgendes umfasst:
- wenigstens einen Kondensator (3), der mit einer Rauchentlüftung (6) der Frittierwanne (1) verbunden ist, der in dem oberen Teil angeordnet ist,
- einen Luftauslass (8), durch den saubere Luft austritt,
- und einen Kondensatauslass (4), durch den eine Auslassströmung (27) aus dem Kondensationssystem (25) austritt, wobei der Kondensatauslass (4) mit einem Kondensatsammler (13) verbunden ist,
- einen Aktivkohlefilter (5), der an dem Luftauslass (8) des Kondensationssystems (25) befestigt ist, der einen Auslass für den Aktivkohlefilter (10) aufweist, durch den eine Auslassströmung aus dem Aktivkohlefilter (24) austritt,
- einen Ozongenerator (9), der eine Ozonströmung (15) erzeugt, die mit der Rauchströmung von der Fritteuse gemischt wird, um die Strömung zu behandeln,
- und einen Extraktor (12), der die Auslassströmung des Aktivkohlefilters (24) in den Außenbereich der Fritteuse ausstößt.

2. Automatische Fritteuse nach Anspruch 1, **dadurch gekennzeichnet, dass** sie einen Metallmaschenfilter (16) umfasst, der zwischen dem Luftauslass (8) des Kondensationssystems (25) und dem Aktivkohlefilter (5) angeordnet ist, der wenigstens einen Teil der Feststoffe in der Auslassströmung (27) des Kondensationssystems (25) zurückhält.

3. Automatische Fritteuse nach einem der vorhergehenden Ansprüche, **dadurch gekennzeichnet, dass**
- sie ein Ölstandsteuerungssystem (20) umfasst, das wiederum Folgendes umfasst:
- einen Referenztemperatursensor (18), der am Boden der Frittierwanne (1) angeordnet ist, und
- wenigstens einen Temperatursensor (17) auf einer ersten Höhe, der auf einer ersten Höhe von dem Boden der Frittierwanne (1) angeordnet ist und eine Mindesthöhe festlegt,
- und dadurch, dass das Ölstandsteuerungssystem (20) den Temperaturunterschied zwischen der Temperatur, die durch den Referenztemperatursensor (18) gemessen wird, und der Temperatur, die durch den Sensor (17) auf der ersten Höhe gemessen wird, berechnet, und den elektrischen Widerstand der Fritteuse ausschaltet, wenn der Temperaturunterschied größer als ein vorgegebener Wert n ist.

4. Automatische Fritteuse nach dem vorhergehenden Anspruch, **dadurch gekennzeichnet, dass** sie ein automatisches Öleinspritzsystem (28) umfasst, das mittels einer Pumpe (29), eines Einspritzschlauchs (30) und eines Ansaugschlauchs (31), der Öl aus einem Behälter (14) entnimmt, Öl in die Frittierwanne (1) einspritzt, wenn der Temperaturunterschied zwischen der Temperatur, die durch den Referenztemperatursensor (18) gemessen wird, und der Temperatur, die durch den Temperatursensor (17) auf der Höhe gemessen wird, größer als der vorgegebene Wert n ist.

5. Automatische Fritteuse nach einem der Ansprüche 3 bis 4, **dadurch gekennzeichnet, dass**
- sie einen Temperatursensor auf einer zweiten Höhe umfasst, der auf einer zweiten Höhe von dem Boden der Frittierwanne (1) angeordnet ist, die höher als die erste Höhe ist, und eine Maximalhöhe festlegt,
- und dadurch, dass das Ölstandsteuerungssystems (20) den Temperaturunterschied zwischen der Temperatur, die durch den Referenztemperatursensor (18) gemessen wird und der Temperatur, die durch den Temperatursensor auf der zweiten Höhe gemessen wird, berechnet, und die Frittierwanne (1) abschaltet, wenn der Temperaturunterschied kleiner als der vorgegebene Wert n ist.

6. Automatische Fritteuse nach einem der Ansprüche 3 bis 5, **dadurch gekennzeichnet, dass** der vorgegebene Wert n 30 °C beträgt.

7. Automatische Fritteuse nach einem der Ansprüche 3 bis 6, **dadurch gekennzeichnet, dass** die Temperatursensoren (17, 18) PT100-Sensoren sind.

8. Automatische Fritteuse nach einem der Ansprüche 3 bis 7, **dadurch gekennzeichnet, dass**
- sie eine Steuerung (19) für polare Komponenten umfasst, die in der Frittierwanne (1) angeordnet ist und mit dem Ölstandsteuerungssystem (20) verbunden ist,
- und dass das Ölstandsteuerungssystem (20) den elektrischen Widerstand der Fritteuse abschaltet, wenn die Werte, die durch die Steuerung (19) für polare Komponenten gemessen werden, außerhalb bestimmter vorgegebener Bereiche liegen.

9. Automatische Fritteuse nach einem der vorhergehenden Ansprüche, **dadurch gekennzeichnet, dass** der Kondensator (3) eine Spule umfasst, die durch Zwangsluftkühlung gekühlt wird, die durch ein Gebläse (21) erzeugt wird.

10. Automatische Fritteuse nach einem der vorhergehenden Ansprüche, **dadurch gekennzeichnet, dass** das Kondensationssystem (25) eine Peltier-Zelle umfasst, die die Ventilationsluft kühlt.

11. Automatische Fritteuse nach einem der vorhergehenden Ansprüche, **dadurch gekennzeichnet, dass** sie ein perforiertes Gitter (23) in der Frittierwanne (1) umfasst, das in einer gegebenen Höhe über den Ölheizmitteln angeordnet ist, das einen Kontakt der zu frittierenden Produkte mit den Ölheizmitteln verhindert.

12. Automatische Fritteuse nach einem der vorhergehenden Ansprüche, **dadurch gekennzeichnet, dass**
- das Rauch- und Geruchsbehandlungssystem (26) eine Mischkammer (11) umfasst, die die Auslassströmung des Aktivkohlefilters (24) aufnimmt,
- und dass die Ozonströmung (15), die durch den Ozongenerator (9) erzeugt wird, ebenfalls in die Mischkammer (11) strömt,
wobei die Auslassströmung des Aktivkohlefilters (24) in der Mischkammer (11) gemischt und behandelt wird.

13. Automatische Fritteuse nach einem der Ansprüche 1 bis 11, **dadurch gekennzeichnet, dass** die Ozonströmung (15), die durch den Ozongenerator (9) erzeugt wird, in die Auslassströmung (27) des Kondensationssystems (25) strömt, wobei die Auslassströmung (27) des Kondensationssystems (25) gemischt und behandelt wird.

## Revendications

1. Friteuse automatique **caractérisée en ce qu'**elle comprend :
- une cuve de friture (1) amovible et agencée verticalement, comportant une entrée (22) pour le produit et une lame radiale rotative, la cuve de friture (1) étant divisée en deux parties par la lame radiale rotative, et **en ce qu'**elle comprend :
- des moyens de contrôle de friture reliés à la cuve de friture (1), qui, à leur tour, comprennent :
- un moyen de contrôle de temps de friture relié à chacune des parties de la cuve de friture (1) et à la lame radiale rotative, pour l'enlèvement automatique des produits à frire une fois qu'un temps établi s'est écoulé, et
- un moyen d'ouverture automatique de l'entrée (22) configuré pour l'ouverture automatique de ladite entrée (22) lorsqu'au moins une des deux parties de la cuve de friture (1) est vide,
- un système de traitement des fumées et des odeurs (26), qui, à son tour, comprend :
- un système de condensation (25), comportant
- au moins un condenseur (3) relié à un échappement de fumées (6) de la cuve de friture (1), agencé dans sa partie supérieure,
- une sortie d'air (8) par laquelle sort l'air propre,
- et une sortie de condensat (4) par laquelle un flux de sortie (27) quitte le système de condensation (25), la sortie de condensat (4) étant reliée à un collecteur de condensat (13),
- un filtre à charbon actif (5) fixé au niveau de la sortie d'air (8) du système de condensation (25), comportant une sortie pour filtre à charbon actif (10) par laquelle un flux de sortie (27) quitte le filtre à charbon actif (24),
- un générateur d'ozone (9) produisant un flux d'ozone (15) qui est mélangé avec le flux de fumées provenant de la friteuse, traitant ledit flux,
- et un extracteur (12), qui expulse le flux de sortie de filtre à charbon actif (24) hors de la friteuse.

2. Friteuse automatique selon la revendication 1, **caractérisée en ce qu'**elle comprend un filtre à tamis métallique (16) agencé entre la sortie d'air (8) du système de condensation (25) et le filtre à charbon actif (5), retenant au moins une partie des solides dans le flux de sortie (27) du système de condensation (25).

3. Friteuse automatique selon l'une quelconque des revendications précédentes, **caractérisée en ce que**
- elle comprend un système de contrôle de niveau d'huile (20), à son tour comprenant :
- une sonde de température de référence (18) agencée au fond de la cuve de friture (1),
- et au moins une sonde de température de premier niveau (17) agencée à une première hauteur depuis le fond de la cuve de friture (1), et déterminant un niveau minimal,
- et **en ce que** le système de contrôle de niveau (20) calcule la différence de températures entre la température mesurée par la sonde de température de référence (18) et la température mesurée par la sonde de température de premier niveau (17) et déconnecte la résistance électrique de la friteuse lorsque ladite différence de températures est supérieure à une valeur n préétablie.

4. Friteuse automatique selon la revendication précédente, **caractérisée en ce qu'**elle comprend un système d'injection d'huile automatique (28) qui, au moyen d'une pompe (29), d'un tube d'injection (30) et d'un tube d'aspiration (31) prélevant l'huile d'un récipient (14), injecte de l'huile dans la cuve de friture (1) lorsque la différence de températures entre la température mesurée par la sonde de température de référence (18) et la température mesurée par la sonde de température de niveau (17) est supérieure à la valeur n préétablie.

5. Friteuse automatique selon l'une quelconque des revendications 3 à 4, **caractérisée en ce que**
- elle comprend une sonde de température de second niveau agencée à une seconde hauteur depuis le fond de la cuve de friture (1), supérieure à la première hauteur, et déterminant un niveau maximal,
- et **en ce que** le système de contrôle de niveau (20) calcule la différence de températures entre la température mesurée par la sonde de température de référence (18) et la température mesurée par la sonde de température de second niveau et déconnecte la cuve de friture (1) lorsque ladite différence de température est inférieure à la valeur n préétablie.

6. Friteuse automatique selon l'une quelconque des revendications 3 à 5, **caractérisée en ce que** la valeur n préétablie est de 30°C.

7. Friteuse automatique selon l'une quelconque des revendications 3 à 6, **caractérisée en ce que** les sondes de température (17, 18) sont des sondes PT100.

8. Friteuse automatique selon l'une quelconque des revendications 3 à 7, **caractérisée en ce que**
- elle comprend un dispositif de contrôle de composés polaires (19) agencé dans la cuve de friture (1) et relié au système de contrôle de niveau d'huile (20),
- et **en ce que** le système de contrôle de niveau d'huile (20) déconnecte la résistance électrique de la friteuse lorsque les valeurs mesurées par ledit dispositif de contrôle de composés polaires (19) sont hors de certaines plages préétablies.

9. Friteuse automatique selon l'une quelconque des revendications précédentes, **caractérisée** en ce le condenseur (3) comprend une bobine refroidie par un refroidissement par air forcé produit par un ventilateur (21).

10. Friteuse automatique selon l'une quelconque des revendications précédentes, **caractérisée en ce que** le système de condensation (25) comprend un élément à effet Peltier refroidissant l'air de ventilation.

11. Friteuse automatique selon l'une quelconque des revendications précédentes, **caractérisée en ce qu'**elle comprend une grille perforée (23) à l'intérieur de la cuve de friture (1) agencée à une hauteur donnée au-dessus du moyen de chauffage d'huile qui empêche le contact des produits à frire avec le moyen de chauffage d'huile.

12. Friteuse automatique selon l'une quelconque des revendications précédentes, **caractérisée en ce que** :
- le système de traitement des fumées et des odeurs (26) comprend une chambre de mélange (11) recevant le flux de sortie de filtre à charbon actif (24)
- et **en ce que** le flux d'ozone (15) produit par le générateur d'ozone (9) s'écoule également dans la chambre de mélange (11),
le flux de sortie de filtre à charbon actif (24) étant mélangé et traité dans ladite chambre de mélange (11).

13. Friteuse automatique selon l'une quelconque des revendications 1 à 11, **caractérisée en ce que** le flux d'ozone (15) produit par le générateur d'ozone (9) s'écoule dans le flux de sortie (27) du système de condensation (25), ledit flux de sortie (27) du système de condensation (25) étant mélangé et traité.
